# EUROPEAN PATENT SPECIFICATION

(11) **EP 3 684 084 B1**
(45) Date of publication and mention of the grant of the patent: **05.01.2022**
(21) Application number: 17925079.0
(22) Date of filing: 15.09.2017
(51) Int. Cl.: H04W 4/00, G06Q 50/30, B60L 53/60, H04W 4/80, H04W 4/70, H04W 4/50, H04W 24/04, H04W 4/40, H04L 29/08, H04L 29/14, B60L 3/00, B60L 53/30, B60L 53/66, B60L 53/68

(54) **DEVICE AND METHOD FOR VARYING COMMUNICATION PATH OF ELECTRIC VEHICLE CHARGER**
VORRICHTUNG UND VERFAHREN ZUR VERÄNDERUNG DES KOMMUNIKATIONSWEGES EINES ELEKTRISCHEN FAHRZEUG-LADEGERÄTES
DISPOSITIF ET PROCÉDÉ DE VARIATION DU TRAJET DE COMMUNICATION D'UN CHARGEUR DE VÉHICULE ÉLECTRIQUE

(30) Priority: 13.09.2017 KR 20170117480
(43) Date of publication of application: 22.07.2020
(73) Proprietor: Ecarplug Co., Ltd., Seongnam-si, Gyeonggi-do 13207 (KR)
(72) Inventor: SHIN, Kwangseob, Gwangju-si Gyeonggi-do 12771 (KR)
(74) Representative: M. Zardi & Co S.A.
(86) International application number: PCT/KR2017/010144
(87) International publication number: WO 2019/054535

(56) References cited:
- WO-A1-2016/089925
- WO-A2-2013/057587
- KR-A- 20120 137 023
- KR-A- 20130 089 711
- KR-A- 20140 123 622
- KR-A- 20150 006 499
- KR-B1- 101 044 476
- US-A1- 2016 046 199

## Description

### Technical Field

The present invention relates to setting a communication path which can address the occurrence of a communication failure and error between an electric vehicle charger and a central server for the charger and, more specifically, to a device and method for addressing the occurrence of a communication failure between an electric vehicle charger and a central server for the charger.

Even when all charging service functions of the electric vehicle charger are perfect, communication may be interrupted due to a failure in any communication channel of the charger. A feature of the present invention is to complete the charging service by overcoming the communication failure in an easy and stable manner, based on the idea that the most accessible and stable communication channel recovery method is one wherein a charging customer establishes an alternative communication channel through his/her personal mobile communication device, which is easy to handle and which the user is familiar with, thereby making it possible to easily respond to an emergency situation.

Accordingly, the present invention relates to a communication channel multiplexing device and method that recovers a communication channel between the electric vehicle charger and the electric vehicle charger central server system to complete the charging service, by establishing the communication channel using the mobile communication (smart) device that the charging customer is carrying, without waiting for the service agent's recovery action, when the communication service of the unmanned electric vehicle charger fails so that the charging service is interrupted and an alternative communication channel is required.

A commercialized-billing electric vehicle charger has a M2M communication module built therein. When the electric vehicle charger and the central server system cannot maintain an online status due to a communication failure in the M2M communication module or other external communication network failure, the server cannot perform billing, as well as the charging customer cannot receive the charging service from the electric vehicle charger.

In order to solve the above problems, a method of duplexing a communication path is adopted, by which a communication network of another communication company is used, by additionally installing a separate M2M communication module in the electric vehicle charger. However, since equipment prices are increased due to the duplexing equipment, as well as the cost of using the communication network is increased, the economic burden on the charger operator and the customer is increased due to a cost increase of charger manufacturing and charging service. In addition, even when the M2M communication module is duplexed, a communication failure or other incomplete communication network may be caused, and thus situations in which the charging service is not possible can occur at any time, whereby the duplexing installation of the M2M communication module is not a fundamental solution.

In order to solve the communication failure of the electric vehicle charger, instead of the communication network duplex configuration of adding the M2M communication module in the related art, the present invention provides a communication path multiplexing device and method for an electric vehicle charger, in which a near-field communication (short-range wireless communication function having a short communication distance, such as Bluetooth, NFC, picocell/femtocell) means is installed in the charger communication unit to cause an alternative communication network to be temporarily established using the data communication channel of a charging customer's mobile communication terminal (such as a smart device with a wireless communication channel), so that an alternative communication network is temporarily established through the charging customer's mobile communication terminal to proceed with the charging service when a communication failure occurs in the M2M communication module, and the alternative communication network formed by the customer using the mobile communication device is released when the customer's charging service is completed, whereby it is possible to implement an electric vehicle charging service without an increased manufacturing cost of the electric vehicle charger or an additional burden of a communication fee.

### Background Art

An electric vehicle is a generic term for a vehicle that uses an electric drive motor as a power source, and receives electric power from a storage battery of the electric vehicle to drive a motor. The electric vehicle is also referred to as an EV and is attracting attention from the standpoints of global warming measures, energy saving, and CO₂ emissions, and thus is rapidly spreading in Korea.

As electric vehicles have been distributed in Korea so that social demands for the construction of charging infrastructure have come to reality, efforts to reduce infrastructure installation costs or management costs are continuously being undertaken.

In general, since the electric vehicle is developed as an electric vehicle driven only by electricity without an internal combustion engine, the electric vehicle has a range of 100 km to several hundred km with a single charge, so that a charger infrastructure for charging the electric vehicle with external power supply is necessary. Therefore, in order to distribute electric vehicles, it is necessary first to secure a charging facility, and thus systematically to establish a system for the facility.

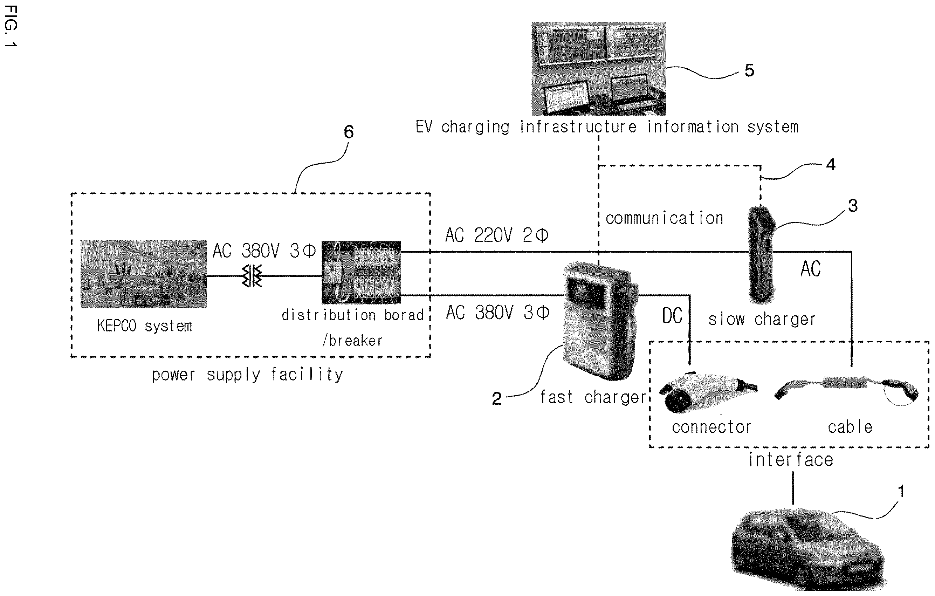

The electric vehicle charging infrastructure is configured to include a power supply facility, a charger, an interface, and an information system as shown in FIG. 1. In the power supply facility, which is an electric facility for supplying power to an electric vehicle, the watt-hour meter includes an inlet wiring, a distribution panel, and a circuit breaker, and the charger is divided into a slow charger that receives power from a single-phase 2-wire 220V and a fast charger that receives power from a 3-phase 4-wire 380V.

The fast charger requires a very large power in its nature. Since the fast charger can charge up to about 80 to 90% in 30 minutes and consume a large power of 50kW, substation equipment capable of supplying a large power of 50kW should be provided.

In order to reduce labor costs of charge infrastructure management costs in the future charging operation of the electric vehicle, the electric vehicle charger infrastructure is progressing toward being unmanned as a basic goal. With respect to the charger, an expensive fast charger that supplies a large-capacity direct current (DC) is installed, as well as an alternative current charger such as a slow charging stand or a home charger with excellent price competitiveness is being reviewed.

The charger serves to supply electricity transmitted from an electricity supplier, such as Korea electric power corporation (KEPCO), to a battery of an electric vehicle, and includes direct charging, noncontact charging, and battery replacement. The direct charging method provides electricity by directly connecting the charger to a charging inlet of the electric vehicle, and recharges the battery installed inside the electric vehicle to a certain level. The slow charging is a method that charges the battery of the electric vehicle by supplying 220V of AC to the electric vehicle through the cable connected to the charger, in which the charger of 3 to 7 kW installed in the vehicle converts the AC 220V into DC to charge the battery, it takes about 3 to 10 hours depending on the battery capacity, and the charger with a power capacity of about 3 to 7 kW is mainly installed. The fast charging is a method in which the charger exchanges control signals with the vehicle to charge the battery of the electric vehicle by variably supplying DC 100 to 450V or AC 380V, in which charging time is short with high voltage and high capacity, it takes about 15 to 30 minutes depending on the battery capacity, and the charger with a 50kW class is mainly installed because it supplies high-capacity power.

The charging information system is a system that collects location and use status information of a charger and provides the same to an electric vehicle user, and monitors the operating state of the charging facility in real time. The charger (fast) installed in the public charging facility is equipped with a user interface, a charging power meter, a user recognition device, and a communication terminal device, in addition to electric vehicle charging function, and is operated in connection with the electric vehicle charging information system of Ministry of Environment through a communication device. The charger uses the communication protocol established by Ministry of Environment for data communication between the central charging information system server and each installed local charger.

Meanwhile, the charging information system is provided so that the electric vehicle charger in each local region maintains an online state with the charger central server system in the center through various communication channels, and the central server system is again connected to other operators' servers (payment service operators, power service operators, etc.) through communication channels.

However, in an environment where the electric vehicle charger is always installed in a parking lot or operated as an unmanned system, when a problem with the communication occurs or a communication failure occurs, there is no communication device or communication network to replace the communication environment. In particular, when the electric vehicle charger is operated in an unmanned environment, there is no countermeasure to overcome the communication failure, whereby there is a problem in that it is difficult to present a solution to a customer who intends to charge the electric vehicle in a remote region.

Document WO 2016089925 discloses charging of an electric vehicle, by receiving a user authentication code in an charging station from a user mobile device and comparing user authentication code to a whitelist to enable charging transaction. The charging station receives the whitelist from a remote server. In case the charging transaction fails, the mobile device may present the user with further opportunities to provide another authentication code.

### Disclosure

### Technical Problem

The present invention is to solve the above problems described above in the related art, the problems including a possibility that a communication failure occurs due to a failure in any communication channel. Therefore, in the case of a very important communication facility, the emergency recovery communication (alternative communication, backup communication) channel for an emergency should always be kept in mind. In particular, most electric vehicle chargers are unmanned, so when the charging service is interrupted due to a communication failure, charging and operation of the electric vehicle is stopped until a specialized service agent or a separate recovery action is taken, resulting in enormous time and economic loss, whereby a countermeasure must be necessarily taken.

Even though all the charging service functions of the electric vehicle charger are perfect, communication may be interrupted due to failures of any communication channel of the charger. Herein, a technology of the present invention is to overcome the communication failure in an easy and stable way to complete the charging service, based on the idea that the most accessible and stable communication channel recovery method is one wherein the customer establishes an alternative communication channel through his/her own mobile communication device, which is easy to handle and which the customer is familiar with..

Accordingly, the present invention relates to a communication channel multiplexing device and method that recovers a communication channel between the electric vehicle charger and the electric vehicle charger central server system to complete the charging service, by establishing the communication channel using the mobile communication (smart) device that the charging customer is carrying, without waiting for the service agent's recovery action, when a failure occurs in the communication service of the unmanned electric vehicle charger so that the charging service is interrupted and an alternative communication channel is required.

The present invention has an objective to provide a communication path multiplexing device and method for an electric vehicle charger, which is equipped with a M2M communication module (using a communication provider wired/wireless communication network, a Wi-Fi wireless communication network), as well as a near-field communication (short-range wireless communication function having a short communication distance, such as Bluetooth, NFC, picocell/femtocell) that is a feature of the present invention, as a charger communication unit of the electric vehicle charger, so that when all of the main communication modules such as the M2M communication module, the Wi-Fi wireless LAN module, etc. are in a communication failure state, a wireless communication network is temporarily established between the central server and the electric vehicle charger, through the mobile communication device of the customer who is to charge the electric vehicle, to recover the communication channel interrupted between the charger and the central server, thereby completing the charging service, and after the charging service is completed, the temporarily established wireless communication network is released, thereby overcoming communication failures occurring in an unmanned environment.

### Technical Solution

In order to achieve the above object, the present invention discloses a communication path multiplexing device and method for an electric vehicle charger.

The communication path multiplexing device for an electric vehicle charger according to the present invention is configured to include a charger communication unit, a control unit, an M2M communication module, a near-field communication means, a public communication network, an electric vehicle charger central server system, and a customer's mobile communication device.

The electric vehicle is a vehicle that runs using the electric energy of the rechargeable battery as a power source, and includes a low-speed electric vehicle, an electric car, an online electric vehicle, a plug-in hybrid electric vehicle, and the like. These electric vehicles are equipped with a controller area network (CAN) and a rechargeable battery management system, so that command signals and data are exchanged during charging/discharging and driving, and a communication function of power line communication (PLC) is possible in the electric vehicles.

The charger control unit is configured to be included in the communication unit of the charger. When a failure occurs in the communication channel between the charger and the vehicle charger central server system, it is checked whether the M2M communication module is normal, and when it is determined that it is difficult to form a communication channel due to the communication module error, a near-field communication (short-range wireless communication function having a short communication distance, such as Bluetooth, NFC, picocell/femtocell) means of the charger communication unit is operated to control the charger communication unit so that a communication channel is formed with the central server system through the customer's mobile communication device (smart device).

The customer's mobile communication device is a personal portable terminal and is a smart device capable of forming a data communication channel through a data communication network (3G, 4G, and LTE data communication network) of each mobile communication company. In addition, the customer's mobile communication device is provided with a near-field communication channel forming function to communicate with the charger and form a communication channel, so that information exchanged through the communication channel between the charger and the near-field communication (short-range wireless communication function having a short communication distance, such as Bluetooth, NFC, picocell/femtocell) means included in the customer's mobile communication device may be transmitted and received to the electric vehicle charger central server system by connecting to the data communication network of the mobile communication company.

The charger is connected to the electric vehicle during charging to perform communication, and is communicated with a central server in which the charger communication unit including the M2M communication module is connected to the electric vehicle charger central server system via the public communication network, a payment service operator server, a power service operator server, and the customer's mobile communication device, via bi-directional communication channel, so that management information of the electric vehicle and the charger is transmitted and received. In addition, the charger 12 sends and receives billing information and charging state information according to the charging amount to/from the central server, and also transmits the vehicle information transmitted to the charger through the electric vehicle and CAN to the central server.

The electric vehicle charger is equipped with an M2M communication module 122 to exchange a variety of data (payment, operation, management, etc.) with the central server via the communication channel for usage fare collection, management, etc, in which the charger performs communication with the central server over a wired/wireless communication network using a communication network of a communication service provider, or performs communication with the central server over the wired communication network through a data communication gateway of a communication provider using the Wi-Fi communication function included in the M2M communication module, or sometimes perform communications using both methods described above.

The M2M communication module of the charger communication unit forms a communication channel over the public communication network through a commercial wired or wireless communication network of a communication provider paying a communication fee or forms a communication channel over the public communication network through a Wi-Fi wireless LAN, so that the charger and the electric vehicle charger central server system are configured to have a bi-directional communication channel.

### Advantageous Effects

According to the present invention, in case communication is interrupted due to a problem with every communication channels of an electric vehicle charger even when all the charging service functions of the charger are perfect, the most accessible and easiest communication channel recovery method is one wherein a customer establishes an alternative communication channel via his/her own mobile communication device that is easy to handle and with which the customer is familiar with, whereby it is possible to complete the charging service by recovering the communication failure without waiting for the recovery action of a service agent. Therefore, even in an unmanned environment, the electric vehicle charging system is restarted to quickly recover the charging service for the charging customers, whereby it is possible to prevent the enormous time and economic loss of charging service companies and charging customers, such as waiting for electric vehicle charging service, stopping electric vehicle operation, etc., which occurs from the interruption of the charging service to the recovery time due to a communication failure, and to reduce the cost of recovering from the communication failure.

### Description of Drawings

FIG. 1 is a configuration diagram showing a general electric vehicle charging infrastructure.
FIG. 2 is a schematic configuration diagram showing an electric vehicle charger communication channel multiplexing device according to an embodiment of the present invention.
FIG. 3 is a block diagram showing an electric vehicle charger communication channel multiplexing device according to an embodiment of the present invention.
FIG. 4 is a detailed configuration diagram showing an electric vehicle charger communication channel multiplexing device according to an embodiment of the present invention.
FIG. 5 is a flow chart showing a procedure in which a control unit forms a communication channel by checking and controlling operations of communication modules when a failure occurs in an M2M communication module of the charger according to the present invention.
FIG. 6 is a detailed configuration diagram showing an electric vehicle charger communication channel multiplexing device according to an embodiment of the present invention.

### [Description of Reference Numeral in Drawings]

1: electric vehicle
2: electric vehicle fast charger
3: electric vehicle slow charger
4: communication network
5: electric vehicle charging infrastructure information system
6: power supply facility
11: electric vehicle
12: electric vehicle charger
13: public communication network (Internet, TRS network, etc.)
14: electric vehicle charger central server system
15: customer's mobile communication device
16: payment service operator
17: power service operator
18: wired/wireless communication channel
120: charger communication unit
121: control unit
122: M2M communication module
123: near-field communication means
124: communication service provider wired/wireless communication network
125: Wi-Fi wireless communication network
126: wireless data communication channel
127: wired data communication channel
128: mobile communication wireless data communication channel
129: wireless communication channel
137: payment information
141: central server
142: communication module
143: manager terminal
144: manager smart terminal
145: management database

### Mode for Invention

Hereinafter, a configuration according to a preferred embodiment of the present invention will be described in detail with reference to the accompanying drawings.

The present invention may have various embodiments, including one embodiment, and specific embodiments are presented in drawings or detailed description, but are not limited thereto, and it should be viewed as including configurations of all equivalent technical scope included in the technical idea of the present invention.

In this specification, in order to clearly describe the technical idea of the present invention, when an electric vehicle charger for charging an electric vehicle communicates with an electric vehicle charger central server system, the present invention discloses an electric vehicle charge that is configured with an electric vehicle; an electric vehicle charger; a control unit; an M2M communication module; a near-field communication means; a customer's mobile communication devices; a public communication network; and an electric vehicle charger central server system to have an electric vehicle charger communication path multiplexing function, as a network multiplexing apparatus and method for forming an auxiliary communication channel when a failure occurs in a communication path.

FIG. 1 is a schematic configuration diagram showing an electric vehicle charger in the related art, in which each charger 2 or 3 transmits information to the electric vehicle charging infrastructure information system 5 through a communication network 4.

However, there is always a possibility of a communication failure in the communication network, and in particular, in the case of an electric vehicle charger, since the communication network is installed in a parking lot and operates unmanned, it is necessary to install an alternative communication channel means that the customer may use in the case of the communication failure.

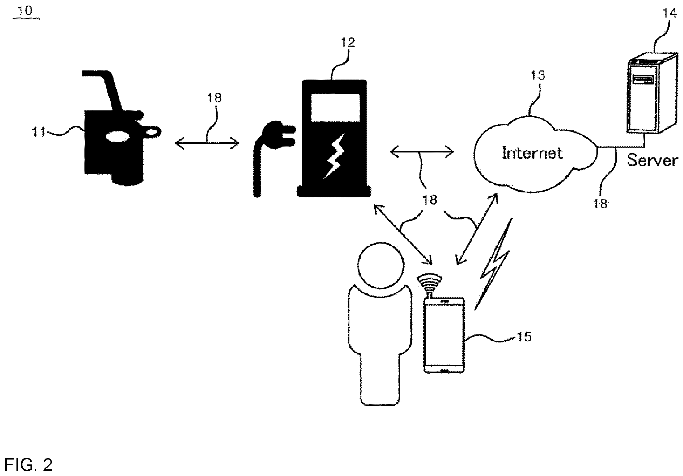

FIG. 2 is a configuration diagram showing an electric vehicle charger communication channel multiplexing device 10 according to an embodiment of the present invention, in which the device is configured to include an electric vehicle 11, an electric vehicle charger 12, a public communication network 13, an electric vehicle charger central server system 14, and a mobile communication device 15, to multiplex the communication channel by forming an auxiliary communication channel when a communication failure occurs between the charger and the central server system.

The electric vehicle is a vehicle that runs using the electric energy of the rechargeable battery as a power source, and includes a low-speed electric vehicle, an electric car, an online electric vehicle, a plug-in hybrid electric vehicle, and the like. These electric vehicles are equipped with a controller area network (CAN) and a rechargeable battery management system, so that command signals and data are exchanged during charging/discharging and driving, and a communication function of power line communication (PLC) is possible in the electric vehicles.

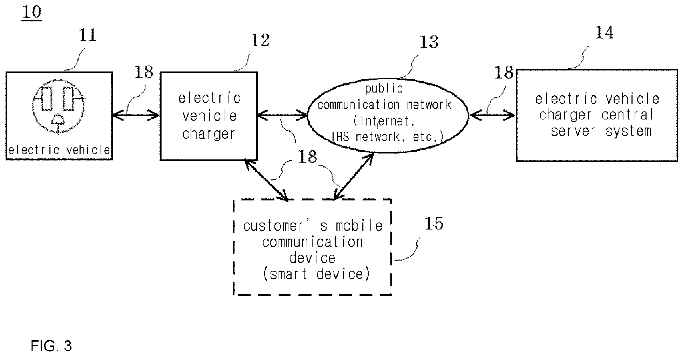

FIG. 3 is a schematic block diagram showing the electric vehicle charger communication channel multiplexing device 10 of FIG. 2.

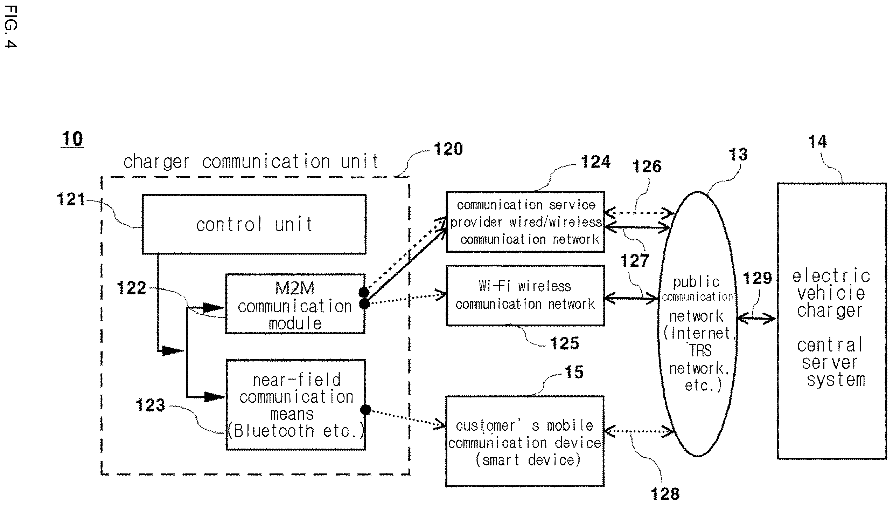

FIG. 4 is a detailed configuration diagram showing an electric vehicle charger communication channel multiplexing device 10 according to an embodiment of the present invention. The electric vehicle charger communication channel multiplexing device 10 is configured to include a charger communication unit 120, a control unit 121, an M2M communication module 122, a near-field communication means 123, a wired/wireless communication network 124, a Wi-Fi wireless communication network 125, and communication provider wireless data communication channel 126, communication provider wired data communication channel 127, a mobile communication wireless data communication channel 128, a public communication network 13, an electric vehicle charger central server system 14, a customer's mobile communication device 15, to multiplex the communication channel by forming an auxiliary communication channel when a communication failure occurs between the charger and the central server system.

As shown in FIG. 4, the M2M communication module 122 (using a communication provider wired/wireless communication network, a Wi-Fi wireless communication network), as well as a near-field communication means 123 (short-range wireless communication function having a short communication distance, such as Bluetooth, NFC, picocell/femtocell) that is a feature of the present invention are equipped in the charger communication unit 120 of the electric vehicle charger 12. When a communication failure occurs, that is, when all the main communication modules such as the M2M communication module, the Wi-Fi wireless LAN module, etc. are in a communication failure state, a wireless communication network (123-15-128-13-129) is temporarily established between the central server and the electric vehicle charger, through the mobile communication device 15 of the customer that is to charge the electric vehicle, to replace the communication channel interrupted between the charger 12 and the central server 141 with the wireless communication network, thereby completing the charging service. After the charging service is completed, the temporarily established wireless communication network (123-15-128-13-129) is released. Therefore, the electric vehicle charger completes the charging service despite communication failures occurring in an unattended environment.

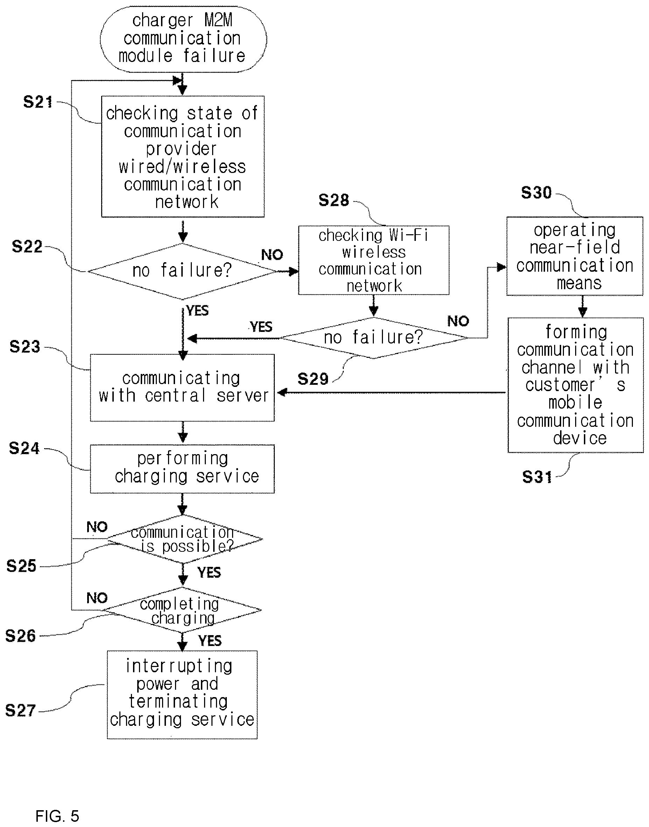

FIG. 5 is a flow chart showing a procedure in which a control unit 121 forms a communication channel by checking and controlling operations of communication modules 122 and 123 when a failure occurs in an M2M communication module 122 of the charger according to the present invention. The control unit 121 of the charger is configured to be included in the communication unit 120 of the charger. When it is determined that the communication channel between the charger 12 and the electric vehicle charger central server system 14 is in a failure state, the state of the communication provider wired/wireless communication network is checked (S21) in order to check whether there is no failure in the M2M communication module 122; when the failure does not occur in the communication network status (S22), a communication channel is established with the central server 141 (S23), to perform charging service (S24); it is continuously checked whether there is the communication failure during the charging service (S25); when it is determined to be in the communication failure state, the procedure returns to the checking (S21) of the communication network state; when the communication is in a normal state, it is determined whether the charging is completed (S26); and then the charging service is terminated (S27). The failure state of the charger communication module is always checked before the charging is finished (S25).

In the case that a failure is found in a communication channel by which the charger M2M communication module is connected to the charger central server system 14 through a communication provider wired/wireless communication network in step S22, it is checked again whether there is no failure in the communication channel of the central server system 14 through the Wi-Fi wireless communication network (S28), and when there is no failure in the Wi-Fi wireless communication network channel (S29), a communication channel is formed with the central server (S23), thereby performing the charging service (S24).

When a communication failure is found in the Wi-Fi wireless communication network channel in step S29, by operating the near-field communication means 123 (short-range wireless communication function having a short communication distance, such as Bluetooth, NFC, picocell/femtocell) (S30), after the customer is instructed to establish a short-range wireless communication channel with the charger and the customer's mobile communication device, a data communication channel (12-123-15-128-13-129-14) of the mobile communication company is established through the customer's mobile communication device 15, a communication channel is formed with the central server system 14 by connecting to the public communication network (S23), and then the charging service is performed (S24).

The customer's mobile communication device 15 is a personal portable terminal and is a smart device capable of forming a data communication channel through a data communication network (3G, 4G, and LTE data communication network) of each mobile communication company. In addition, the customer's mobile communication device is provided with a near-field communication channel forming function to communicate with the charger and form a communication channel, so that information exchanged through the communication channel between the charger and the near-field communication means (short-range wireless communication function having a short communication distance, such as Bluetooth, NFC, picocell/femtocell) included in the customer's mobile communication device may be transmitted and received to the electric vehicle charger central server system by connecting to the data communication network of the mobile communication company.

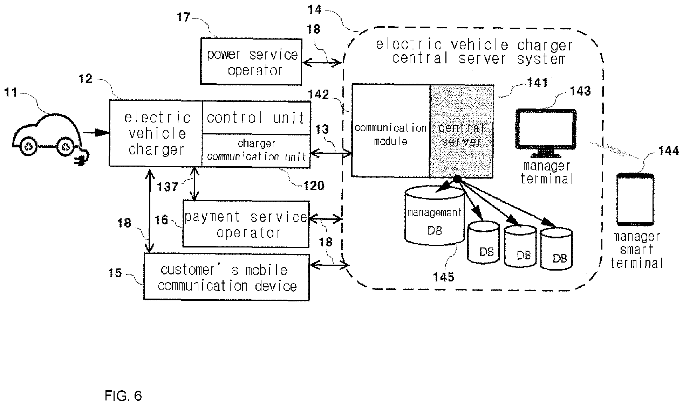

FIG. 6 is a detailed configuration diagram showing that various operating operators are connected to the electric vehicle charger central server system 14 in the electric vehicle charger communication channel multiplexing device according to an embodiment of the present invention. The charger 12 is connected to the electric vehicle 11 during charging to perform communication, and is communicated with a central server in which the charger communication unit 120 including the M2M communication module is connected to the electric vehicle charger central server system 14 via the public communication network 13, a payment service operator server, a power service operator server, and the customer's mobile communication device, via bi-directional communication channel, so that management information of the electric vehicle and the charger is transmitted and received. In addition, the charger 12 sends and receives billing information and charging state information according to the charging amount to/from the central server, and also transmits the vehicle information transmitted to the charger through the electric vehicle and CAN to the central server.

In addition, the electric vehicle charger 12 is equipped with an M2M communication module 122 to exchange a variety of data (payment, operation, management, etc.) with the central server 141 via the communication channel 13 for usage fare collection, management, etc, in which the charger 12 performs communication with the central server 141 over a wired/wireless communication network 126 or 127 using a communication network of a communication service provider, or performs communication with the central server 141 over the wired communication network 127 through a data communication gateway of a communication provider using the Wi-Fi communication function included in the M2M communication module 122, or sometimes perform communications using both methods described above.

The M2M communication module 142 of the charger communication unit 120 forms a communication channel over a public communication network 13, (public data networks such as Internet, TRS network, etc.) via commercial wired or wireless communication networks 126 and 127 of the communication provider that pays for communication fee, so that the charger and the central server 141 may be configured to have a bi-directional communication channel 13. Alternatively, the communication network 127 may be formed over the public communication network 13 through a Wi-Fi wireless LAN 125.

The communication module 120 of the electric vehicle charger 12 and the communication module 142 of the central server in FIG. 6 is an integrated charger information management system in which charging and management status data of the charger (location, charger operation/management state, communication channel state, etc.) in each local region is shared in real time, so that the central server 141 monitors the state of the charger 12, and manages charger operations maintaining and updating each charger management program, as well as payment approval information in connection with a power service operator 17, a payment service operator 16, and the customer's mobile communication device 15.

As shown in FIG. 6, all the management states occurring in the electric vehicle charger 12 is delivered to the central server 141 through the communication module and stored in the management database 145, so that the manager may not only monitor the state of each charger displayed through the terminal 143 in real time, but also remotely manage the state via the smart terminal 144 of the manager remotely over a wired or wireless communication network.

## Claims

1. A communication path multiplexing device for an electric vehicle charger, the charger charging a battery of the electric vehicle and comprising:
a charger communication unit including various communication modules of the charger;
a control unit checking states of the communication modules of the charger communication unit and forming a communication channel to control communication between the charger and a communication module of an external device;
an M2M communication module forming a communication channel between the charger and the external device to perform communication through control of the control unit;
a near-field communication means forming a communication channel between the charger and a near-field communication means of an external mobile communication device through control of the control unit;
a public communication network;
an electric vehicle charger central server system monitoring an operation and management state of the electric vehicle charger in real time; and
a customer's mobile communication device having a function of forming a near-field communication channel with the near-field communication means of the charger,
wherein the M2M communication module of the charger is connected to the public communication network through a communication provider wired/wireless communication network or a Wi-Fi wireless communication network to be capable of being communicated with the electric vehicle charger central server system,
the control unit detects that a communication failure has occurred when the control unit is not connected to the public communication network through the Wi-Fi wireless communication network or the wired/wireless communication network of the M2M communication module, to temporarily establish a wireless communication network between the electric vehicle charger and the electric vehicle charger central server system through the customer's mobile communication device to replace the communication channel interrupted between the charger and the electric vehicle charger central server system with the wireless data communication network established through the customer's mobile communication device, thereby recovering the communication channel and completing the charging service, and after the service is completed, to release the temporarily established communication network, the wireless data communication network established through the customer's mobile communication device, to complete the charging service interrupted due to the communication failure,
the public communication network includes an Internet,
the electric vehicle charger central server system includes a central server, a communication module, an administrator terminal, an administrator smart terminal, and a management database,
the M2M communication module of the electric vehicle charger and the communication module of the central server include an integrated charger information management system in which charging and management status data, e.g., location charger operation/management state, communication channel state, etc., of the charger is shared in real time, so that the central server monitors a state of the charger, and manages charger operations maintaining and updating a charger management program, as well as payment information in connection with a power service operator, a payment service operator, and the customer's mobile communication device,
the near-field communication means of the charger and a near-field communication means having a near-field communication channel forming function used in the customer's mobile communication device include a Bluetooth and an NFC, and further includes a near-field communication means having a communication range of picocell and a femtocell, and
the customer's mobile communication device is a personal portable terminal and uses a data communication network including 3G, 4G, and LTE of each mobile communication company.

2. The device of claim 1, wherein the M2M communication module of the charger communication unit forms a communication channel over the public communication network through a commercial wired or wireless communication network of a communication provider paying a communication fee or forms a communication channel over the public communication network through a Wi-Fi wireless LAN, so that the charger and the electric vehicle charger central server system are configured to have a bi-directional communication channel, and alternatively adopts both manners of forming the communication channel through the commercial wired/wireless communication network of the communication provider paying the communication fee, as well as forming the communication channel through the public communication network through the Wi-Fi wireless LAN, so that the charger and the electric vehicle charger central server system are configured to have a bi-directional communication channel.

3. A communication path multiplexing method for an electric vehicle charger, the charger charging a battery of the electric vehicle and comprising:
a charger communication unit including various communication modules of the charger;
a control unit checking states of the communication modules of the charger communication unit and forming a communication channel to control communication between the charger and a communication module of an external device;
an M2M communication module forming a communication channel between the charger and the external device to perform communication through control of the control unit;
a near-field communication means forming a communication channel between the charger and a near-field communication means of an external mobile communication device through control of the control unit;
a public communication network;
an electric vehicle charger central server system monitoring an operation and management state of the electric vehicle charger in real time; and
a customer's mobile communication device having a function of forming a near-field communication channel with the near-field communication means of the charger,
the method comprising:
allowing the M2M communication module of the charger to be connected to the public communication network to be capable of being communicated with the electric vehicle charger central server system, through a communication provider wired/wireless communication network or a Wi-Fi wireless communication network;
detecting, by the control unit, that a communication failure has occurred when not being connected to the public communication network through the Wi-Fi wireless communication network or the wired/wireless communication network of the M2M communication module;
temporarily establishing a wireless communication network between the electric vehicle charger and the electric vehicle charger central server system through the customer's mobile communication device;
replacing the interrupted communication channel between the charger and the electric vehicle charger central server system with the wireless data communication network established through the customer's mobile communication device to recover the communication channel, thereby completing a charging service; and
releasing the temporarily established communication network, wireless data communication network established through the customer's mobile communication device, after completing the charging service, thereby enabling to complete charging serve interrupted due to the communication failure,
wherein the public communication network includes an Internet,
the electric vehicle charger central server system includes a central server, a communication module, an administrator terminal, an administrator smart terminal, and a management database,
the M2M communication module of the electric vehicle charger and the communication module of the central server include an integrated charger information management system in which charging and management status data, e.g. location charger operation/management state, communication channel state, etc., of the charger is shared in real time, so that the central server monitors a state of the charger, and manages charger operations maintaining and updating a charger management program, as well as payment information in connection with a power service operator, a payment service operator, and the customer's mobile communication device,
the near-field communication means of the charger and a near-field communication means having a near-field communication channel forming function used in the customer's mobile communication device include a Bluetooth and an NFC, and further includes a near-field communication means having a communication range of picocell and a femtocell, and
the customer's mobile communication device is a personal portable terminal and uses a data communication network including 3G, 4G, and LTE of each mobile communication company.

## Patentansprüche

1. Kommunikationspfadmultiplexvorrichtung für ein Elektrofahrzeugladegerät, wobei das Ladegerät eine Batterie des Elektrofahrzeugs lädt, und umfassend:
eine Ladegerätkommunikationseinheit umfassend verschiedene Kommunikationsmodule des Ladegeräts;
eine Steuereinheit, die Zustände der Kommunikationsmodule der Ladegerätkommunikationseinheit überprüft und einen Kommunikationskanal bildet, um eine Kommunikation zwischen dem Ladegerät und einem Kommunikationsmodul einer externen Vorrichtung zu steuern;
ein M2M-Kommunikationsmodul, das einen Kommunikationskanal zwischen dem Ladegerät und der externen Vorrichtung bildet, um eine Kommunikation durch Steuerung der Steuereinheit durchzuführen;
ein Nahfeldkommunikationsmittel, das einen Kommunikationskanal zwischen dem Ladegerät und einem Nahfeldkommunikationsmittel einer externen mobilen Kommunikationsvorrichtung durch Steuerung der Steuereinheit bildet;
ein öffentliches Kommunikationsnetzwerk;
ein Elektrofahrzeugladegerät-Zentralserversystem, das einen Betriebs- und
Managementzustand des Elektrofahrzeugladegeräts in Echtzeit überwacht; und
eine mobile Kundenkommunikationsvorrichtung, die eine Funktion eines Bildens eines Nahfeldkommunikationskanals mit dem Nahfeldkommunikationsmittel des Ladegeräts aufweist,
wobei das M2M-Kommunikationsmodul des Ladegeräts mit dem öffentlichen Kommunikationsnetzwerk durch ein verdrahtetes/drahtloses Kommunikationsnetzwerk eines Kommunikationsanbieters oder drahtloses Wi-Fi-Kommunikationsnetzwerk verbunden ist, um in der Lage zu sein, mit dem Elektrofahrzeugladegerät-Zentralserversystem in Verbindung gebracht zu werden,
die Steuereinheit detektiert, dass ein Kommunikationsausfall stattgefunden hat, wenn die Steuereinheit nicht mit dem öffentlichen Kommunikationsnetzwerk durch das drahtlose Wi-Fi-Kommunikationsnetzwerk oder das verdrahtete/drahtlose Kommunikationsnetzwerk des M2M-Kommunikationsmoduls verbunden ist, um vorübergehend ein Drahtloskommunikationsnetzwerk zwischen dem Elektrofahrzeugladegerät und dem Elektrofahrzeugladegerät-Zentralserversystem durch die mobile
Kundenkommunikationsvorrichtung aufzubauen, um den zwischen dem Ladegerät und dem Elektrofahrzeugladegerät-Zentralserversystem unterbrochenen Kommunikationskanal durch das durch die mobile Kundenkommunikationsvorrichtung aufgebaute Drahtlosdatenkommunikationsnetzwerk zu ersetzen, wodurch sie den Kommunikationskanal wiederherstellt und den Ladedienst fertigstellt, und nachdem der Dienst fertiggestellt ist, das vorübergehend aufgebaute Kommunikationsnetzwerk, das durch die mobile Kundenkommunikationsvorrichtung aufgebaute Drahtlosdatenkommunikationsnetzwerk, freizugeben, um den aufgrund des Kommunikationsausfalls unterbrochenen Ladedienst fertigzustellen,
das öffentliche Kommunikationsnetzwerk ein Internet umfasst,
das Elektrofahrzeugladegerät-Zentralserversystem einen Zentralserver, ein Kommunikationsmodul, ein Administrator-Terminal, ein Administrator-Smart-Terminal und
eine Management-Datenbank umfasst;
das M2M-Kommunikationsmodul des Elektrofahrzeugladegeräts und das Kommunikationsmodul des Zentralservers ein integriertes Ladegerät-Informationsmanagementsystem umfassen, in dem Lade- und Managementstatusdaten, z.B.
Ort, Ladegerät-Betriebs-/Managementzustand, Kommunikationskanalzustand, etc., des Ladegeräts in Echtzeit geteilt werden, so dass der Zentralserver einen Zustand des Ladegeräts überwacht, und Ladegerätoperationen unter Aufrechterhaltung und
Aktualisierung eines Ladegerätmanagementprogramms verwaltet, sowie Zahlungsinformationen in Verbindung mit einem Leistungsdienstbetreiber, einem Zahlungsdienstbetreiber und der mobilen Kundenkommunikationsvorrichtung,
das Nahfeldkommunikationsmittel des Ladegeräts und ein Nahfeldkommunikationsmittel,
das eine einen Nahfeldkommunikationskanal bildende Funktion aufweist, die in der mobilen Kundenkommunikationsvorrichtung verwendet wird, Bluetooth und NFC umfassen, und ferner ein Nahfeldkommunikationsmittel umfasst, das einen Kommunikationsbereich einer Picozelle und einer Femtozelle aufweist, und
die mobile Kundenkommunikationsvorrichtung ein persönliches tragbares Endgerät ist und ein Datenkommunikationsnetzwerk umfassend 3G, 4G und LTE jedes Mobilkommunikationsunternehmens verwendet.

2. Vorrichtung nach Anspruch 1, wobei das M2M-Kommunikationsmodul der Ladegerätkommunikationseinheit einen Kommunikationskanal über das öffentliche Kommunikationsnetzwerk durch ein kommerzielles verdrahtetes oder drahtloses Kommunikationsnetzwerk eines Kommunikationsanbieters unter Zahlung einer Kommunikationsgebühr bildet oder einen Kommunikationskanal über das öffentliche Kommunikationsnetzwerk durch ein drahtloses Wi-Fi-LAN bildet, so das das Ladegerät und das Elektrofahrzeugladegerät-Zentralserversystem dazu konfiguriert sind, einen bidirektionalen Kommunikationskanal aufzuweisen, und alternativ beide Arten des Bildens des Kommunikationskanals durch das kommerziell verdrahtete/drahtlose Kommunikationsnetzwerk des Kommunikationsanbieters unter Zahlung der Kommunikationsgebühr, sowie des Bildens des Kommunikationskanals durch das öffentliche Kommunikationsnetzwerk durch das drahtlose Wi-Fi-LAN anwendet, so das das Ladegerät und das Elektrofahrzeugladegerät-Zentralserversystem dazu konfiguriert sind, einen bidirektionalen Kommunikationskanal aufzuweisen.

3. Kommunikationspfadmultiplexverfahren für ein Elektrofahrzeugladegerät, wobei das Ladegerät eine Batterie des Elektrofahrzeugs lädt, und umfassend:
eine Ladegerätkommunikationseinheit umfassend verschiedene Kommunikationsmodule des Ladegeräts;
eine Steuereinheit, die Zustände der Kommunikationsmodule der Ladegerätkommunikationseinheit überprüft und einen Kommunikationskanal bildet, um eine Kommunikation zwischen dem Ladegerät und einem Kommunikationsmodul einer externen Vorrichtung zu steuern;
ein M2M-Kommunikationsmodul, das einen Kommunikationskanal zwischen dem Ladegerät und der externen Vorrichtung bildet, um eine Kommunikation durch Steuerung der Steuereinheit durchzuführen;
ein Nahfeldkommunikationsmittel, das einen Kommunikationskanal zwischen dem Ladegerät und einem Nahfeldkommunikationsmittel einer externen mobilen Kommunikationsvorrichtung durch Steuerung der Steuereinheit bildet;
ein öffentliches Kommunikationsnetzwerk;
ein Elektrofahrzeugladegerät-Zentralserversystem, das einen Betriebs- und
Managementzustand des Elektrofahrzeugladegeräts in Echtzeit überwacht; und
eine mobile Kundenkommunikationsvorrichtung, die eine Funktion eines Bildens eines Nahfeldkommunikationskanals mit dem Nahfeldkommunikationsmittel des Ladegeräts aufweist,
wobei das Verfahren umfasst:
Ermöglichen dem M2M-Kommunikationsmodul des Ladegeräts, mit dem öffentlichen Kommunikationsnetzwerk verbunden zu werden, um in der Lage zu sein, durch ein verdrahtetes/drahtloses Kommunikationsnetzwerk eines Kommunikationsanbieters oder drahtloses Wi-Fi-Kommunikationsnetzwerk mit dem Elektrofahrzeugladegerät-Zentralserversystem in Verbindung gebracht zu werden;
Detektieren, durch die Steuereinheit, dass ein Kommunikationsausfall stattgefunden hat, wenn sie nicht mit dem öffentlichen Kommunikationsnetzwerk durch das drahtlose Wi-Fi-Kommunikationsnetzwerk oder das verdrahtete/drahtlose Kommunikationsnetzwerk des M2M-Kommunikationsmoduls verbunden ist;
vorübergehendes Aufbauen eines Drahtloskommunikationsnetzwerks zwischen dem Elektrofahrzeugladegerät und dem Elektrofahrzeugladegerät-Zentralserversystem durch die mobile Kundenkommunikationsvorrichtung;
Ersetzen des zwischen dem Ladegerät und dem Elektrofahrzeugladegerät-Zentralserversystem unterbrochenen Kommunikationskanals durch das durch die mobile Kundenkommunikationsvorrichtung aufgebaute Drahtlosdatenkommunikationsnetzwerk, um den Kommunikationskanal wiederherzustellen, wodurch der Ladedienst fertiggestellt wird; und
Freigeben des vorübergehend aufgebauten Kommunikationsnetzwerks, des durch die mobile Kundenkommunikationsvorrichtung aufgebauten
Drahtlosdatenkommunikationsnetzwerks, nach Fertigstellen des Ladedienstes, wodurch ermöglicht wird, den aufgrund des Kommunikationsausfalls unterbrochenen Ladedienst fertigzustellen,
wobei das öffentliche Kommunikationsnetzwerk ein Internet umfasst,
das Elektrofahrzeugladegerät-Zentralserversystem einen Zentralserver, ein Kommunikationsmodul, ein Administrator-Terminal, ein Administrator-Smart-Terminal und eine Management-Datenbank umfasst;
das M2M-Kommunikationsmodul des Elektrofahrzeugladegeräts und das Kommunikationsmodul des Zentralservers ein integriertes Ladegerät-Informationsmanagementsystem umfassen, in dem Lade- und Managementstatusdaten, z.B. Ort, Ladegerät-Betriebs-/Managementzustand, Kommunikationskanalzustand, etc., des Ladegeräts in Echtzeit geteilt werden, so dass der Zentralserver einen Zustand des Ladegeräts überwacht, und Ladegerätoperationen unter Aufrechterhaltung und Aktualisierung eines Ladegerätmanagementprogramms verwaltet, sowie Zahlungsinformationen in Verbindung mit einem Leistungsdienstbetreiber, einem Zahlungsdienstbetreiber und der mobilen Kundenkommunikationsvorrichtung,
das Nahfeldkommunikationsmittel des Ladegeräts und ein Nahfeldkommunikationsmittel, das eine einen Nahfeldkommunikationskanal bildende Funktion aufweist, die in der mobilen Kundenkommunikationsvorrichtung verwendet wird, Bluetooth und NFC umfassen, und ferner ein Nahfeldkommunikationsmittel umfasst, das einen Kommunikationsbereich einer Picozelle und einer Femtozelle aufweist, und
die mobile Kundenkommunikationsvorrichtung ein persönliches tragbares Endgerät ist und ein Datenkommunikationsnetzwerk umfassend 3G, 4G und LTE jedes Mobilkommunikationsunternehmens verwendet.

## Revendications

1. Dispositif de multiplexage de voie de communication pour un chargeur de véhicule électrique, le chargeur chargeant une batterie du véhicule électrique et comprenant :
une unité de communication du chargeur incluant différents modules de communication du chargeur,
une unité de commande vérifiant les états des modules de communication de l'unité de communication du chargeur et formant un canal de communication pour contrôler la communication entre le chargeur et un module de communication d'un dispositif externe,
un module de communication M2M formant un canal de communication entre le chargeur et le dispositif externe pour réaliser la communication via la commande de l'unité de commande,
un moyen de communication de champ proche formant un canal de communication entre le chargeur et un moyen de communication de champ proche d'un dispositif de communication mobile externe via la commande de l'unité de commande,
un réseau public de communication,
un système de serveur central du chargeur de véhicule électrique surveillant un état de fonctionnement et de gestion du chargeur de véhicule électrique en temps réel et
un dispositif de communication mobile du consommateur ayant une fonction de formation d'un canal de communication de champ proche avec le moyen de communication de champ proche du chargeur,
**caractérisé en ce que** le module de communication M2M du chargeur est connecté au réseau public de communication par un réseau de communication filaire/sans fil d'un fournisseur de communication ou un réseau de communication sans fil Wi-Fi devant être capable d'être en communication avec le système du serveur central du chargeur de véhicule électrique,
l'unité de commande détecte qu'un échec de communication a eu lieu quand l'unité de commande n'est pas connectée au réseau public de communication par le réseau de communication sans fil Wi-Fi ou le réseau de communication filaire/sans fil du module de communication M2M, pour établir temporairement un réseau de communication sans fil entre le chargeur de véhicule électrique et le système du serveur central du chargeur de véhicule électrique par le dispositif de communication mobile du consommateur pour remplacer le canal de communication interrompu entre le chargeur et le système du serveur central du chargeur du véhicule électrique avec le réseau de communication de données sans fil établi via le dispositif de communication mobile du consommateur, rétablissant ainsi le canal de communication et complétant le service de recharge et après que le service ait été rempli, de débloquer le réseau de communication temporairement établi, le réseau de communication de données sans fil établi à travers le dispositif de communication mobile du consommateur, pour terminer le service de recharge interrompu à cause de l'échec de la communication,
le réseau public de communication inclut un internet, le système du serveur central du chargeur de véhicule électrique inclut un serveur central, un module de communication, un terminal d'administrateur, un terminal intelligent d'administrateur et une base de données de gestion,
le module de communication M2M du chargeur de véhicule électrique et le module de communication du serveur central incluent un système intégré de gestion de l'information du chargeur dans lequel les données de statut de chargement et de gestion, par exemple la localisation, l'état de fonctionnement/gestion du chargeur, l'état du canal de communication, etc..., du chargeur sont partagées en temps réel, si bien que le serveur central surveille un état du chargeur et gère les opérations du chargeur de maintien et de mise à jour d'un programme de gestion du chargeur, ainsi que les informations de paiement en connexion avec un opérateur de service d'électricité, un opérateur de service de paiement et le dispositif de communication mobile du consommateur,
le moyen de communication de champ proche du chargeur et un moyen de communication de champ proche ayant un canal de communication de champ proche formant une fonction utilisée dans le dispositif de communication mobile du consommateur incluant un Bluetooth et un NFC, et incluant en outre un moyen de communication de champ proche ayant une portée de communication de picocellule et une femtocellule et
le dispositif de communication mobile du consommateur est un terminal portable personnel et utilise un réseau de communication de données incluant la 3G, la 4G et la LTE de chaque société de communication mobile.

2. Dispositif selon la revendication 1, **caractérisé en ce que** le module de communication M2M de l'unité de communication du chargeur forme un canal de communication sur le réseau public de communication par un réseau de communication commercial filaire ou sans fil d'un fournisseur de communication en payant les frais de communication ou forme un canal de communication sur le réseau public de communication par une LAN sans fil Wi-Fi, si bien que le chargeur et le système du serveur central du chargeur de véhicule électrique sont configurés pour avoir un canal de communication bidirectionnel et adopter alternativement les deux façons de former le canal de communication par le réseau de communication commercial filaire/sans fil du fournisseur de communication en payant les frais de communication, ainsi qu'en formant le canal de communication par le réseau public de communication par le LAN sans fil Wi-Fi, si bien que le chargeur et le système du serveur central du chargeur de véhicule électrique sont configurés pour avoir un canal de communication bidirectionnel.

3. Procédé de multiplexage de voie de communication pour un chargeur de véhicule électrique, le chargeur chargeant une batterie du véhicule électrique et comprenant :
une unité de communication du chargeur incluant différents modules de communication du chargeur,
une unité de commande vérifiant les états des modules de communication de l'unité de communication du chargeur et la formation d'un canal de communication pour contrôler la communication entre le chargeur et un module de communication d'un dispositif externe,
un module de communication M2M formant un canal de communication entre le chargeur et le dispositif externe pour réaliser la communication à travers la commande de l'unité de commande,
un moyen de communication de champ proche formant un canal de communication entre le chargeur et un moyen de communication de champ proche d'un dispositif de communication mobile externe par la commande de l'unité de commande,
un réseau public de communication,
un système de serveur central du chargeur de véhicule électrique surveillant un état de fonctionnement et de gestion du chargeur de véhicule électrique en temps réel et
un dispositif de communication mobile du consommateur ayant une fonction de formation d'un canal de communication de champ-proche avec le moyen de communication de champ-proche du chargeur,
le procédé comprenant de :
permettre au module de communication M2M du chargeur d'être connecté au réseau public de communication afin d'être capable de communiquer avec le système du serveur central du chargeur de véhicule électrique, par un réseau de communication filaire/sans fil d'un fournisseur de communication ou un réseau de communication sans fil Wi-Fi,
détecter, par l'unité de commande, qu'un échec de communication a eu lieu quand il n'y a pas de connexion au réseau public de communication par le réseau de communication sans fil Wi-Fi ou le réseau de communication filaire/sans fil du module de communication M2M,
établir temporairement un réseau de communication sans fil entre le chargeur de véhicule électrique et le système du serveur central du chargeur de véhicule électrique par le dispositif de communication mobile du consommateur,
remplacer le canal de communication interrompu entre le chargeur et le système du serveur central du chargeur de véhicule électrique avec le réseau de communication de données sans fil établi à travers le dispositif de communication mobile du consommateur pour récupérer le canal de communication, réalisant ainsi un service de recharge et
débloquer le réseau de communication établi temporairement, réseau de communication de données sans fil établi par le dispositif de communication mobile du consommateur après la réalisation du service de recharge, permettant ainsi de réaliser le service de recharge interrompu à cause de l'échec de communication,
où le réseau public de communication inclut un internet,
le système du serveur central du chargeur du véhicule électrique inclut un serveur central, un module de communication, un terminal d'administrateur, un terminal intelligent d'administrateur et une base de données de gestion,
le module de communication M2M du chargeur de véhicule électrique et le module de communication du serveur central incluent un système de gestion de l'information du chargeur intégré dans lequel les données de statut de chargement et de gestion, comme la localisation, l'état de fonctionnement/gestion de chargeur, l'état du canal de communication, etc..., du chargeur sont partagées en temps réel, si bien que le serveur central surveille un état du chargeur et gère les opérations du chargeur de maintien et de la mise à jour d'un programme de gestion du chargeur, ainsi que les informations de paiement en connexion avec un opérateur de service d'électricité, un opérateur de service de paiement et le dispositif de communication mobile du consommateur,
le moyen de communication de champ proche du chargeur et un moyen de communication de champ proche ayant un canal de communication de champ proche forment une fonction utilisée dans le dispositif de communication mobile du consommateur incluant un Bluetooth et un NFC et incluant en outre un moyen de communication de champ proche ayant une portée de communication de picocellule et une femtocellule et
le dispositif de communication mobile du consommateur est un terminal portable personnel et utilise un réseau de communication de données incluant la 3G, la 4G et la LTE de chaque société de communication mobile.
